# EUROPÄISCHE PATENTSCHRIFT

(11) **EP 1 917 088 B1**
(45) Veröffentlichungstag und Bekanntmachung des Hinweises auf die Patenterteilung: **02.03.2011**
(21) Anmeldenummer: 06792608.9
(22) Anmeldetag: 31.07.2006
(51) Int. Cl.: B01D 35/18, F02M 37/22

(54) **FILTEREINRICHTUNG MIT EINER HEIZUNG**
FILTER DEVICE COMPRISING A HEATER
DISPOSITIF DE FILTRAGE COMPORTANT UN CHAUFFAGE

(30) Priorität: 16.08.2005 DE 102005038536; 24.07.2006 DE 102006034077
(43) Veröffentlichungstag der Anmeldung: 07.05.2008
(73) Patentinhaber: ROBERT BOSCH GMBH, 70442 Stuttgart (DE)
(72) Erfinder: BRIELMANN, Volker, E-28220 Madrid (ES); HAGER, Bernhard, A-5412 Puch (AT); BAZ, Alfonso, E-28290 Las Matas (ES); BLASCO REMACHA, Carlos J., E-19200 Azuqueca de Henares (guadalajara) (ES); BERNEGGER, Leopold, A-5421 Adnet (AT); PARRA NAVARRETE, Alberto, E-28027 Madrid (ES)
(86) Internationale Anmeldenummer: PCT/EP2006/064837
(87) Internationale Veröffentlichungsnummer: WO 2007/020179

(56) Entgegenhaltungen:
- DE-A1- 19 602 082
- FR-A- 2 802 245
- GB-A- 1 568 503
- US-A- 2 909 284
- US-A- 4 580 542

## Beschreibung

### Stand der Technik

Die Erfindung betrifft eine Filtereinrichtung, insbesondere einen Flüssigkeitsfilter, wie etwa einen Hamstofffilter oder Kraftstofffilter, mit einem Filterelement, weiches in einem Filtergehäuse angeordnet ist, und mit einer Heizung zum Erwärmen von durch die Filtereinrichtung strömendem Medium. Ferner betrifft die Erfindung ein Verfahren zum Herstellen einer solchen Filtereinrichtung.

Um bei Filtereinrichtungen und insbesondere bei Flüssigkeitsfiltem unter verschiedensten Betriebsbedingungen für eine gleichmäßig gute Filtration zu sorgen, ist es bekannt an den Filtereinrichtungen jeweils eine Heizung vorzusehen. Mit der Heizung kann beispielsweise ein Gefrieren oder eine Flockenbildung des Filtrats, wie beispielsweise Diesel, bei einem Kaltstart eines zugehörigen Kraftfahrzeugs verhindert und für einen gleichmäßig hohen Durchsatz an Medium durch die Filtereinrichtung gesorgt werden. Auch bei Harnstoffriltern kann eine solche Heizung notwendig sein. Die dabei verwendeten Heizungen werden als elektrische PTC-Heizung (Positive Temperature Coefficient) ausgebildet, welche eine selbsttätige Regelung aufweisen, und speziell an die herzustellende Heizsituation angepasst. Die PTC-Elemente werden als separate Bauteile innerhalb der Konstruktion der Filtereinrichtung berücksichtigt und entsprechend von Zulieferern zugekauft und bei der Montage der Filtereinrichtung in diese eingebaut. Der dabei mit den Heizungen verbundene Aufwand ist erheblich.

Die Patentschrift GB 1 568 503 zeigt einen Flüssigkeitsfilter mit einer elektrischen Heizung. Dabei wird ein elektrisch leitendes Filtermaterial verwendet. Das elektrisch leitende Filtermaterial ist elektrisch angeschlossen. Der Pluspol des Flüssigkeitsfilters ist über einen Draht und ein Anschlussblech mit dem Filtermaterial elektrisch verbunden, wobei das Anschlussblech über einen Hohlniet an das Filtermaterial angenietet ist.

### Aufgabe und Lösung der Erfindung

Der Erfindung liegt die Aufgabe zugrunde eine Filtereinrichtung bereitzustellen, bei der die oben genannten Probleme überwunden sind und insbesondere auf kostengünstige Weise eine hohe Heizleistung mit geringen Kosten hergestellt ist.

Die erfindungsgemäße Aufgabe ist mit einer Filtereinrichtung der genannten Art gelöst, bei der die Heizung mit mindestens einer Heizbahn gestaltet ist, die an mindestens einem ihrer Endbereiche mit einem elektrischen Kontakt gestaltet ist, welcher mit der Heizbahn vernietet ist. Diese Lösung bietet erhebliche Vorteile im Vergleich zu bekannten Lötverbindungen von Anschlusskontakten an Heizbahnen. Derartige Lötverbindungen sind aufwendig in der Herstellung und bergen zudem das Risiko, dass sie als so genannte kalte Lötstellen ausgebildet werden, welche ein bekanntes Qualitätsproblem sind. Ferner haben gelötete Kontaktpins eine geringere Festigkeit bei einem nachfolgenden Umspritzvorgang.

Die Verbindung zwischen der Heizbahn und dem erfindungsgemäßen elektrischen Kontakt ist als eine nietlose Verbindung, also als eine Nietverbindung ohne einen separaten Niet gestaltet. Die nietlose Verbindung bringt es mit sich, dass nur zwei unterschiedliche Materialien einander kontaktierend miteinander verbunden sind. Die nietlose Verbindung ist daher hinsichtlich Kontaktkorrosion weniger problematisch, als herkömmliche Verbindungen mit einem Niet als separates Bauteil.

Vorteilhaft ist die Heizung mit mindestens einer Heizbahn gestaltet, welche in dem Filtergehäuse eingespritzt ist.

Im Gegensatz zu bekannten Filtereinrichtungen, welche als Heizung mit PTC-Elementen versehen sind, wird erfindungsgemäß für die Heizung der Filtereinrichtung ein Heizbahn bzw. ein Heizdraht oder auch eine Heizwendel vorgesehen, welche ferner in das Filtergehäuse der Filtereinrichtung eingespritzt ist. Mit einem derartigen Einspritzen, welches auch als Umspritzen bezeichnet wird, kann die erfindungsgemäß vorgesehene Heizbahn während der Herstellung von deren Filtergehäuse mit vergleichsweise geringem Aufwand in die Wandung des Filtergehäuses integriert werden. Nachfolgend entfällt der aus dem Stand der Technik bekannte logistische Aufwand und auch der Montageaufwand für ein Heizelement Die erfindungsgemäße Heizbahn ist besonders vorteilhaft als Stanzgitter gestaltet, welches, ähnlich wie bekannte Leiterbahnen, In einem Stanzprozess aus einem streifen- oder blattförmigen Metallblech ausgestanzt wird. Das Stanzgitter kann dabei (insbesondere in von der eigentlichen Heizung getrennten Gitterabschnitten) auch weitere elektrische Funktionen, wie beispielsweise das Zu- oder Ableiten von Versorgungsstrom zu der zugehörigen Filtereinrichtung umfassen. Der dabei vorzusehende Spritzgießvorgang kann auf den zahlreichen Kenntnissen und Erfahrungen mit anderen Bauteilen aufbauen, welche heutzutage an verschiedensten technischen Einrichtungen in insbesondere aus Kunststoff hergestellte Gehäuse eingespritzt werden. Ein weiterer besonderer Vorteil der Erfindung ist darin zu sehen, dass das durch die Filtereinrichtung strömende Medium sich im Innem des Filtergehäuses zwar in unmittelbarer Nähe der Heizung befindet, aber dennoch nicht in direkten Kontakt mit der Heizung kommt. Ein derartiger direkter Kontakt ist bei bekannten Filtereinrichtungen beispielsweise bei einer Filtration von Harnstoffwasserlösung ein Problem, weil Harnstoff sich bereits bei zirka 60° C zersetzt.

Darüber hinaus ist es ein wichtiger Vorteil der erfindungsgemäßen Heizung, dass diese zu einer besonders gleichmäßigen Verteilung der zugeführten Wärmeenergie über die Flächenausdehnung des Filtergehäuses hinweg führt. Dadurch werden (schädliche bzw. unerwünschte) örtliche Temperaturspitzen am Filtergehäuse vermieden. Zugleich benötigt die erfindungsgemäße Heizung und damit die gesamte Filtereinrichtung besonders wenig Bauraum bei gleichzeitig hoher Heizleistung. Dabei wird insbesondere die angestrebte Temperatur in allen wesentlichen Filterbereichen sehr schnell sowie weitgehend gleichmäßig erreicht.

Um einen insbesondere für kraftfahrtechnische Anwendungen besonders zweckmäßig einsetzbaren Filter zu schaffen und zugleich an der erfindungsgemäßen Heizeinrichtung einen hohen Wirkungsgrad zu erzielen, ist es von Vorteil, das Filtergehäuse zylindrisch zu gestalten und die mindestens eine Heizbahn im Mantelabschnitt des zylindrischen Filtergehäuses anzuordnen.

Die genannten Vorteile hinsichtlich einer besonders guten Nutzung der zugeführten Heizenergie und der Schaffung eines besonders bedarfgerechten Temperaturprofils über die Oberfläche des erfindungsgemäßen Filtergehäuse hinweg, können ferner in besonderem Maße erreicht werden, indem die mindestens eine Heizbahn in der Fläche des Filtergehäuses schleifenförmig verteilt angeordnet ist.

Alternativ oder zusätzlich kann auch der Aufwand für die Montage der erfindungsgemäßen Filtereinrichtung besonders klein gehalten werden, wenn die mindestens eine Heizbahn nicht direkt in das Filtergehäuse eingespritzt, sondern wenn sie in einem Halteelement vorpositioniert wird. Mit dem Halteelement können die einzelnen Schleifen der Heizbahn relativ zueinander und auch Im Verhältnis zu Anschlusskontakten in einer definierten Weise gehalten werden. Die derart gehaltenen Heizbahnen lassen sich dann einfach weiterverarbeiten und können beispielsweise auch zu einer Spritzgießmaschine automatisch zugeführt werden, welche für das Einspritzen der Heizbahnen in das Filtergehäuse vorgesehen ist. Das Halteelement kann dabei selbst in einem Spritzprozess geschaffen worden sein, bei dem insbesondere die Heizbahn eingelegt und umspritzt worden ist Dieses Umspritzen kann mit Spritzgießmaschinen durchgeführt werden, welche speziell für das (kleinflächige) Umspritzen der Heizbahn eingerichtet sind, während Spritzgießmaschinen für die Gehäuseherstellung in der Regel erheblich komplexere Anforderungen hinsichtlich z.B. der Oberflächengüte des hergestellten Filtergehäuses erfüllen müssen.

Um einen besonders guten Wärmeeintrag, ein schnelles Reaktionsvermögen und einen hohen Wirkungsgrad zu erreichen, ist es bei der erfindungsgemäßen Filtereinrichtung ferner von Vorteil, wenn die mindestens eine Heizbahn im Wesentlichen an der Innenseite des Filtergehäuses angeordnet ist. Die Heizbahn ist in dieser Anordnung nur geringfügig mit Material des Filtergehäuses überdeckt.

Der Übergang von Wärmeenergie in das durch die erfindungsgemäße Filtereinrichtung strömende Medium kann ferner dadurch verbessert werden, dass das Filtergehäuse aus einem hochwärmeleitenden Kunststoffhergestellt ist. Zum Erzeugen einer besonders guten Wärmeleitfähigkeit ist dieser Kunststoff vorteilhaft mit Füllungen aus Aluminium-Oxid und/oder Magnesium-Hydroxid gestaltet.

Da die erfindungsgemäßen Heizbahnen (anders als PTC-Heizelemente) in der Regel nicht selbst regelnd sind, sollten diese Heizbahnen mit einer eigenen Regelung in Gestalt einer Steuereinrichtung zum gesteuerten Zuführen von elektrischer Energie zu der mindesten einen Heizbahn versehen sein. Eine solche Steuereinrichtung kann beispielsweise mit einer Pulsweitenmodulation oder einer anderen elektronischen Schaltung gestaltet sein, mit der ein Überhitzen und gegebenenfalls ein Durchbrennen der erfindungsgemäßen Filtereinrichtung sicher verhindert ist

Schließlich ist es bei der Filtereinrichtung gemäß der Erfindung von besonderem Vorteil, wenn die mindestens eine Heizbahn an ihren Enden jeweils mit einem elektrischen Kontakt gestaltet ist, welcher aus dem Material des Filtergehäuses herausgeführt ist. Die elektrischen Kontakte können dann zum Anschließen der genannten Steuereinrichtung, zur Kommunikation mit einem oder mehreren Temperatursensoren und/oder zum Einspeisen von elektrischer Energie genutzt werden.

Vorteilhaft ist bei der erfindungsgemäßen Filtereinrichtung ferner der elektrische Kontakt aus einem anderen Material als die Heizbahn gestaltet. Das Material des elektrischen Kontaktes kann dabei insbesondere mittels eines Präge-, Börtel- oder Lötprozesses mit der Heizbahn verbunden sein. Die letztgenannte Lösung ermöglicht es, an die Heizbahn einer Heizung einer Filtereinrichtung insbesondere einen auf dem Markt bereits erhältlichen und in der Regel standardisierten Stecker anzuschließen. Die genannten elektrischen Kontakte, welche an die Heizbahn erfindungsgemäß angekoppelt und aus einem anderen Material ausgebildet sind, können nämlich nicht nur hinsichtlich ihrer Form und ihrer Größe, sondern auch hinsichtlich ihres Materials nahezu frei gewählt und entsprechend an die Vorgaben eines standardisierten Steckers angepasst werden.

Besonders bevorzugt ist die Heizbahn an ihrem zum elektrischen Kontakt gewandten Endbereich mit mindestens einer Öffnung gestaltet, in welche ein am elektrischen Kontakt ausgebildeter Vorsprung eingesetzt und nietlos vernietet ist. Die derartige Verbindung kann fertigungstechnisch besonders prozesssicher und kostengünstig hergestellt werden. Die erfindungsgemäß vorgesehene mindestens eine Öffnung weist bevorzugt einen Öffnungsquerschnitt von zwischen ca. 0,5 mm und ca. 1,0 mm auf. Die Anzahl der Nietpunkte ist bevorzugt zwei bis drei.

Die Heizbahn ist bevorzugt bei diesen Weiterbildungen der Erfindung aus einem gezielt hochohmigen Material und der angenietete elektrische Kontakt aus einem gezielt niederohmigen Material hergestellt. Derart unterschiedliche Materialien für Heizbahn und elektrischem Kontakt sind gezielt an die den einzelnen Elementen zugeordneten Funktionen angepasst. So wird als Material für die elektrischen Kontakte bevorzugt CuSn gewählt, wohingegen die Heizbahn speziell aus einem Material mit hohem elektrischen Widerstand gefertigt ist, welches insbesondere gut gestanzt werden kann.

Damit sich der mit der erfindungsgemäßen Lösung durch die zwei zunächst getrennten Bauteile Weizbahn und elektrischer Kontakt zunächst ergebende zusätzliche Fertigungsaufwand möglichst gering darstellt, wird der elektrische Kontakt schließlich vorteilhaft mittels eines Arbeitsschritts mit der Heizbahn vernietet, bei dem gleichzeitig die Heizbahn ausgestanzt wird.

### Kurzbeschreibung der Zeichnungen

Nachfolgend wird ein Ausführungsbeispiel einer erfindungsgemäßen Filtereinrichtung anhand der beigefügten schematischen Zeichnungen näher erläutert. Es zeigt:
- Fig. 1: eine perspektivische Darstellung eines Halbschnittes eines Ausführungsbeispiels einer erfindungsgemäßen Filtereinrichtung,

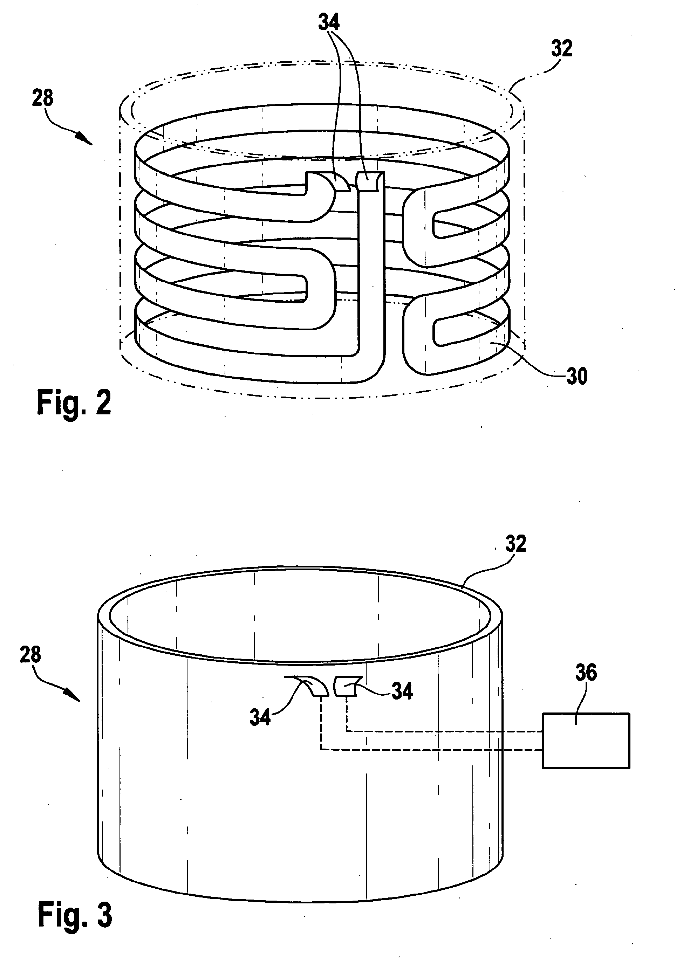

- Fig. 2: eine perspektivische Ansicht einer Heizbahn der Filtereinrichtung gemäß Fig. 1,
- Fig. 3: eine perspektivische Ansicht der in einem Halteelement umspritzten Heizbahn gemäß Fig. 2,
- Fig. 4: ein Filtergehäuse einer Filtereinrichtung gemäß Fig. 1 mit einem darin eingearbeiteten Halteelement samt Heizbahn gemäß den Fig. 2 und 3,
- Fig. 5: eine Ansicht gemäß Fig. 2 eines zweiten Aus führungsbeispiels einer erfindungsgemäßen Heizbahn einer Filtereinrichtung mit daran angenieteten elektrischen Kontakten,
- Fig. 6: eine vergrößerte Darstellung des Detail VI aus Fig. 5,
- Fig. 7: eine weiter vergrößerte Darstellung einer Heizbahn gemäß Fig. 6 vor dem Vernieten und
- Fig. 8: die Darstellung gemäß Fig. 7 nach dem Vernieten.

### Detaillierte Beschreibung des Ausführungsbeispiels

In den Fig. ist eine Filtereinrichtung 10 veranschaulicht, welche als grundlegende Elemente ein aus einem Gehäusetopf 12 und einem Gehäusedeckel 14 zusammengesetztes Filtergehäuse und ein sich in dem Filtergehäuse befindendes Filterelement 16 aufweist.

Der Gehäusetopf 12 ist in seiner Grundform als ein Becher gestaltet, der einen Gehäuseboden 18 und eine daran am Umfang anschließende Ringwand 20 umfasst Die Ringwand 20 ist im Wesentlichen zylindrisch um eine Längsachse Agestaltet. Der Gehäuseboden 18 ist zentrisch von einer Durchgangsöffnung 22 durchsetzt, welche zum Anschließen eines nicht dargestellten Sensors dient Gegenüberliegend ist im Gehäusedeckel 14 ein Dom 24 mit einer, diesen in Richtung der Längsachse A durchsetzenden Durchgangsöffnung 26 ausgebildet

Durch diese Durchgangsöffnung 26 hindurch wird im Betrieb der Filtereinrichtung 10 ein zu filtrierendes Fluid bzw. Medium, wie beispielsweise Kraftstoff oder Harnstoff; eingeleitet, welches nachfolgend von radial innen nach radial außen durch das Füterelement 16 hindurchtritt und durch einen nicht dargestellten Auslass die Filtereinrichtung 10 verlässt

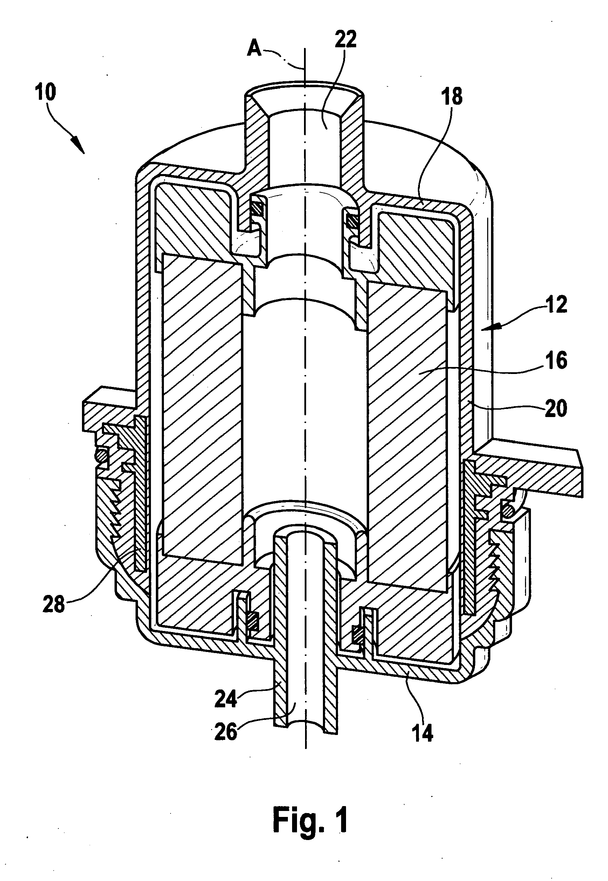

Damit es bei besonders niedrigen Betriebstemperaturen an der Filtereinrichtung 10 insbesondere nicht zu einer Flockenbildung oder einem Gefrieren des filtrierten Fluids in oder am Filterelement 16 kommt, ist in der Ringwand 20 des Gehäusetopfes 12 in dessen bezogen auf Fig. 1 unterem Abschnitt eine Heizung 28 angeordnet. Die Wärmeerzeugung erfolgt bei dieser Heizung 28 mittels einer in Schleifen gelegten Heizbahn 30, durch welche hindurch elektrischer Strom geleitet werden kann.

Die Schleifen der Heizbahn 30 sind als ein so genanntes Stanzgitter durch einen Stanzvorgang aus einem Blechstreifen herausgeformt und nachfolgend zu einem Ring gebogen worden. Sie Heizbahn 30 ist dabei derart über die Mantelfläche der Ringwand 20 hinweg verteilt worden, dass es zu einem großflächigen und zugleich gleichmäßigen Eintrag von Wärmeenergie in die Ringwand 20 und damit in das darin fließende Fluid kommt.

Die derart ausgestanzte und vorgeformte Heizbahn 30 der Heizung 28 ist ferner in einem ersten Spritzprozess in ein rohrförmiges Halteelement 32 aus Kunststoff eingespritzt worden. Der Kunststoff des Halteelements 32 kann mit Aluminium-Oxid oder Magnesium-Hydroxid angereichert und dadurch hochwärmeleitend gestaltet. Bei dem Spritzvorgang sind ferner an der Heizbahn 30 zwei Kontaktstelle 34 derart aus dem Halteelement 32 herausgeführt worden, dass daran nachfolgend eine nur stark vereinfacht dargestellte Steuereinrichtung 36 zum Zuführen und Regeln von elektrischem Strom zu der Heizbahn 30 angeschlossen werden kann.

In einem zweiten Spritzvorgang ist das Halteelement 32 dann zusammen mit der darin angeordneten Heizbahn 30 in die bereits genannte Ringwand 20 des Gehäusetopfes 12 eingebettet worden. Dabei wurde das Halteelement 32 nochmals umspritzt, insbesondere bevorzugt mit einem hochwärmeleitenden Kunststoff wobei zugleich der gesamte Gehäusetopf 12 hergestellt wurde. Die Kontaktstellen 34 ragen danach zum Anschließen der Steuereinrichtung 36 aus dem Gehäusetopf 12 heraus.

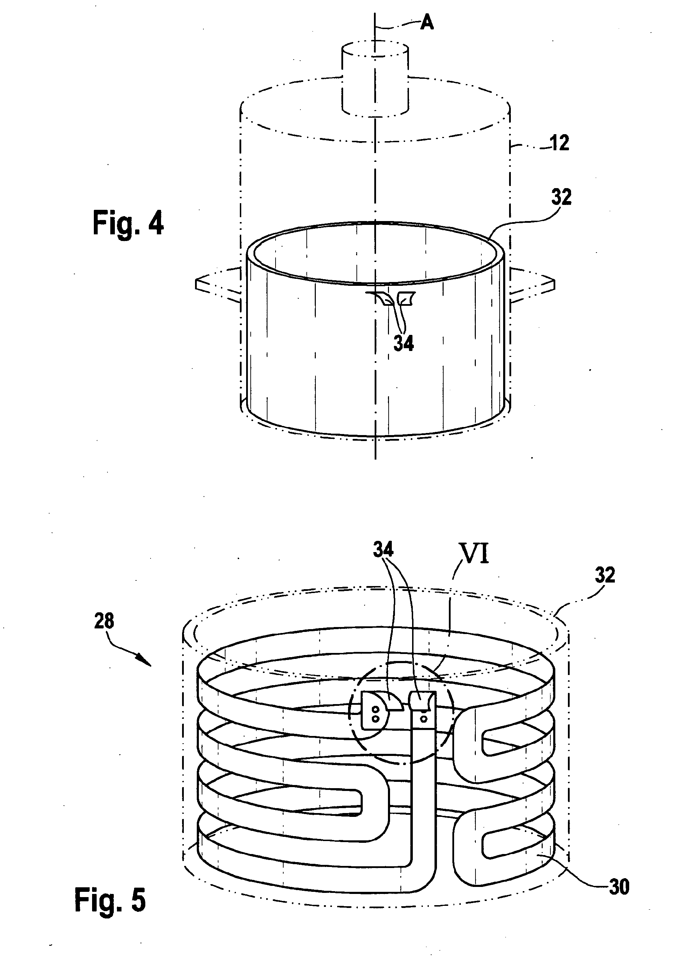

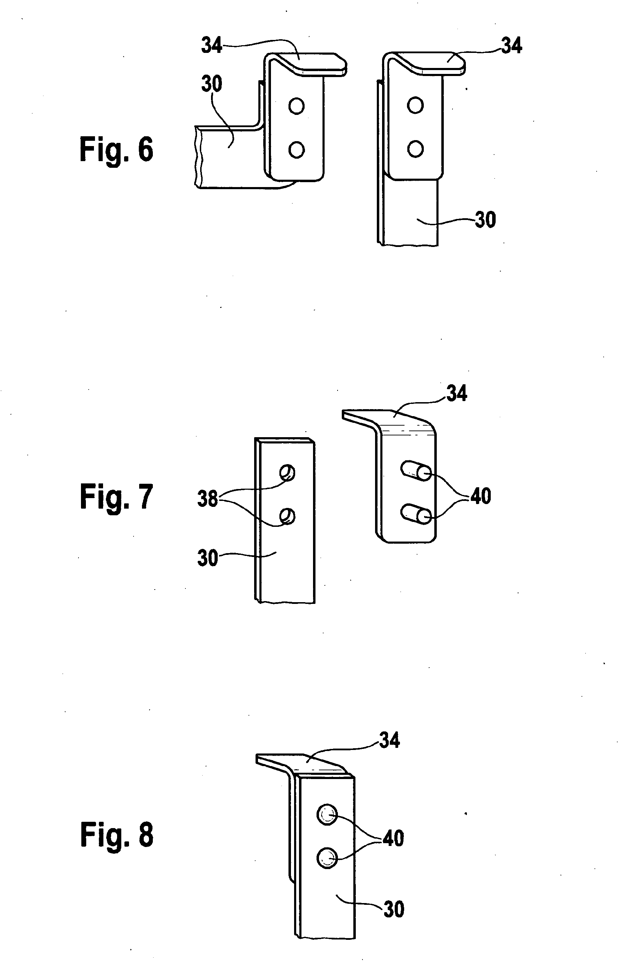

In den Fig. 5 bis 8 ist ein Ausführungsbeispiel einer erfindungsgemäßen Heizung 28 mit einer Heizbahn 30 veranschaulicht, welche ebenfalls in ein Halteelement 32 eingespritzt ist und bei dem ferner auch elektrische Kontaktstellen bzw. Kontakte 34 aus dem Material des Halteelementes 32 herausragen.

Die elektrischen Kontaktstellen 34 sind jedoch bei diesem Aus führungsbeispiel nicht einstückig bzw. einteilig mit dem Material der Heizbahn 30 ausgebildet, sondern als jeweils separate Kontaktfahne, welche mit dem Endbereich der Heizbahn 30 vernietet ist Die Nietverbindung ist jeweils nietlos mittels zweier an dem Endbereich der Heizbahn 30 in Längsrichtung der Heizbahn 30 hintereinander angeordneter Öffnungen 38 in Form von Bohrungen ausgebildet, in welche je ein am zugehörigen elektrischen Kontakt 34 ausgebildeter Vorsprung 40 in Form eines Stiftes oder Pins eingesetzt und vernietet ist.

## Patentansprüche

1. Filtereinrichtung (10), insbesondere Flüssigkeitsfilter, mit einem Filterelement (16), welches in einem Filtergehäuse (12, 14) angeordnet ist, und einer Heizung (28) zum Erwärmen von durch die Filtereinrichtung (10) strömendem Medium, mit mindestens einem elektrischen Kontakt (34), **dadurch gekennzeichnet, dass** die Heizung (28) mit mindestens einer Heizbahn (30) gestaltet ist, die an mindestens einem ihrer Endbereiche mit dem mindestens einem elektrischen Kontakt (34) gestaltet ist, wobei die Verbindung zwischen der Heizbahn (30) und dem elektrischen Kontakt (34) als eine Nietverbindung ohne einen separaten Niet gestaltet ist.

2. Filtereinrichtung nach Anspruch 1, **dadurch gekennzeichnet, dass** die Heizung (28) mit mindestens einer Heizbahn (30) gestaltet ist, welche in dem Filtergehäuse (12, 14) eingespritzt ist.

3. Filtereinrichtung nach Anspruch 1 oder 2, **dadurch gekennzeichnet, dass** die mindestens eine Heizbahn (30) von einem metallischen Stanzgitter gebildet ist.

4. Filtereinrichtung nach Anspruch 1, 2 oder 3, **dadurch gekennzeichnet, dass** das Filtergehäuse (12, 14) zylindrisch gestaltet und die mindestens eine Heizbahn (30) im Mantelabschnitt des zylindrischen Filtergehäuses (12, 14) angeordnet ist.

5. Filtereinrichtung nach einem der Ansprüche 1 bis 4, **dadurch gekennzeichnet, dass** die mindestens eine Heizbahn (30) in der Fläche des Filtergehäuses (12, 14) schleifenförmig verteilt angeordnet ist.

6. Filtereinrichtung nach einem der Ansprüche 1 bis 5, **dadurch gekennzeichnet, dass** die mindestens eine Heizbahn (30) in einem Halteelement (32) vorpositioniert ist, das nachfolgend mit dem Material des Filtergehäuses (12, 14) umspritzt ist.

7. Filtereinrichtung nach Anspruch 6, **dadurch gekennzeichnet, dass** das Halteelement (32) aus einem hochwärmeleitenden Kunststoff hergestellt ist.

8. Filtereinrichtung nach einem der Ansprüche 1 bis 7, **dadurch gekennzeichnet, dass** das Filtergehäuse (12, 14) aus einem hochwärmeleitenden Kunststoff hergestellt ist.

9. Filtereinrichtung nach einem der Ansprüche 1 bis 8, **dadurch gekennzeichnet, dass** die mindestens eine Heizbahn (30) im Wesentlichen an der Innenseite des Filtergehäuses (12, 14) angeordnet ist.

10. Filtereinrichtung nach einem der Ansprüche 1 bis 9, **dadurch gekennzeichnet, dass** eine Steuereinrichtung (36) zum gesteuerten Zuführen von elektrischer Energie zu der mindestens einen Heizbahn (30) vorgesehen ist.

11. Filtereinrichtung nach einem der Ansprüche 1 bis 10, **dadurch gekennzeichnet, dass** die mindestens eine Heizbahn (30) an ihren Enden jeweils mit einem elektrischen Kontakt (34) gestaltet ist, welcher aus dem Material des Filtergehäuses (12, 14) herausgeführt ist.

12. Filtereinrichtung nach einem der Ansprüche 1 bis 11, **dadurch gekennzeichnet, dass** die mindestens eine Heizbahn (30) an mindestens einem ihrer Endbereiche mit einem elektrischen Kontakt (34) versehen ist, welcher aus einem anderen Material als die Heizbahn (30) gestaltet ist.

13. Filtereinrichtung nach einem der Ansprüche 1 bis 12, **dadurch gekennzeichnet, dass** die Heizbahn (30) an ihrem zum elektrischen Kontakt gewandten Endbereich mit mindestens einer Öffnung (38) gestaltet ist, in welche ein am elektrischen Kontakt (30) ausgebildeter Vorsprung (40) eingesetzt und vernietet ist.

14. Filtereinrichtung nach einem der Ansprüche 1 bis 13, **dadurch gekennzeichnet, dass** die Heizbahn (30) aus einem gezielt hochohmigen Material und der angenietete elektrische Kontakt (34) aus einem gezielt niederohmigen Material hergestellt ist.

15. Verfahren zum Herstellen einer Filtereinrichtung nach einem der Ansprüche 1 bis 14, **dadurch gekennzeichnet, dass** der elektrische Kontakt (34) durch einen Arbeitsschritt mit der Heizbahn (30) vernietet wird, bei dem gleichzeitig die Heizbahn (30) ausgestanzt wird.

## Claims

1. Filter device (10), in particular liquid filter, with a filter element (16) which is arranged in a filter housing (12, 14), and a heating (28) for heating a medium flowing through the filter device (10), and at least one electrical contact (34), **characterized in that** the heating (28) is configured with at least one heating track (30) which is configured on at least one of its end regions with the at least one electrical contact (34), the connection between the heating track (30) and the electrical contact (34) being configured as a rivet joint without a separate rivet.

2. Filter device according to Claim 1, **characterized in that** the heating (28) is configured with at least one heating track (30) which is injection-moulded in the filter housing (12, 14).

3. Filter device according to Claim 1 or 2, **characterized in that** the at least one heating track (30) is formed by a metallic pressed screen.

4. Filter device according to Claim 1, 2 or 3, **characterized in that** the filter housing (12, 14) is configured cylindrically, and the at least one heating track (30) is arranged in the surface portion of the cylindrical filter housing (12, 14).

5. Filter device according to one of Claims 1 to 4, **characterized in that** the at least one heating track (30) is arranged so as to be distributed in loop form in the surface of the filter housing (12, 14).

6. Filter device according to one of Claims 1 to 5, **characterized in that** the at least one heating track (30) is prepositioned in a holding element (32), around which the material of the filter housing (12, 14) is subsequently injection-moulded.

7. Filter device according to Claim 6, **characterized in that** the holding element (32) is produced from a highly heat-conductive plastic.

8. Filter device according to one of Claims 1 to 7, **characterized in that** the filter housing (12, 14) is produced from a highly heat-conductive plastic.

9. Filter device according to one of Claims 1 to 8, **characterized in that** the at least one heating track (30) is arranged essentially on the inside of the filter housing (12, 14).

10. Filter device according to one of Claims 1 to 9, **characterized in that** a control device (36) for the controlled supply of electrical energy to the at least one heating track (30) is provided.

11. Filter device according to one of Claims 1 to 10, **characterized in that** the at least one heating track (30) is configured at each of its ends with an electrical contact (34) which is led out of the material of the filter housing (12, 14).

12. Filter device according to one of Claims 1 to 11, **characterized in that** the at least one heating track (30) is provided on at least one of its end regions with an electrical contact (34) which is configured from a material other than that of the heating track (30).

13. Filter device according to one of Claims 1 to 12, **characterized in that** the heating track (30) is configured, on its end region facing the electrical contact, with at least one orifice (38), into which a projection (40) formed on the electrical contact (30) is inserted and riveted.

14. Filter device according to one of Claims 1 to 13, **characterized in that** the heating track (30) is produced from a deliberately high-resistance material and the riveted-on electrical contact (34) is produced from a deliberately low-resistance material.

15. Method for producing a filter device according to one of Claims 1 to 14, **characterized in that** the electrical contact (34) is riveted to the heating track (30) by means of a work step during which the heating track (30) is simultaneously stamped out.

## Revendications

1. Dispositif de filtre (10), notamment filtre à liquide, avec un élément de filtre (16) qui est disposé dans un boîtier de filtre (12, 14), et un chauffage (28) pour réchauffer le fluide s'écoulant à travers le dispositif de filtre (10), avec au moins un contact électrique (34), **caractérisé en ce que** le chauffage (28) est réalisé avec au moins une bande chauffante (30) qui est pourvue sur au moins l'une de ses régions d'extrémité de l'au moins un contact électrique (34), la connexion entre la bande chauffante (30) et le contact électrique (34) étant réalisée sous forme de connexion rivetée sans rivet séparé.

2. Dispositif de filtre selon la revendication 1, **caractérisé en ce que** le chauffage (28) est réalisé avec au moins une bande chauffante (30), qui est injectée dans le boîtier de filtre (12, 14).

3. Dispositif de filtre selon la revendication 1 ou 2, **caractérisé en ce que** l'au moins une bande chauffante (30) est formée par un grillage estampé métallique.

4. Dispositif de filtre selon la revendication 1, 2 ou 3, **caractérisé en ce que** le boîtier de filtre (12, 14) est réalisé sous forme cylindrique et l'au moins une bande chauffante (30) est disposée dans la portion d'enveloppe du boîtier de filtre cylindrique (12, 14).

5. Dispositif de filtre selon l'une quelconque des revendications 1 à 4, **caractérisé en ce que** l'au moins une bande chauffante (30) est disposée de manière répartie en forme de boucles dans la surface du boîtier de filtre (12, 14).

6. Dispositif de filtre selon l'une quelconque des revendications 1 à 5, **caractérisé en ce que** l'au moins une bande chauffante (30) est prépositionnée dans un élément de retenue (32) qui est surmoulé ultérieurement avec le matériau du boîtier de filtre (12, 14).

7. Dispositif de filtre selon la revendication 6, **caractérisé en ce que** l'élément de retenue (32) est fabriqué en un plastique hautement conducteur de chaleur.

8. Dispositif de filtre selon l'une quelconque des revendications 1 à 7, **caractérisé en ce que** le boîtier de filtre (12, 14) est fabriqué en un plastique hautement conducteur de chaleur.

9. Dispositif de filtre selon l'une quelconque des revendications 1 à 8, **caractérisé en ce que** l'au moins une bande chauffante (30) est disposée essentiellement sur le côté intérieur du boîtier de filtre (12, 14).

10. Dispositif de filtre selon l'une quelconque des revendications 1 à 9, **caractérisé en ce qu'**il est prévu un dispositif de commande (36) pour acheminer de manière commandée de l'énergie électrique à l'au moins une bande chauffante (30).

11. Dispositif de filtre selon l'une quelconque des revendications 1 à 10, **caractérisé en ce que** l'au moins une bande chauffante (30) est réalisée à ses extrémités à chaque fois avec un contact électrique (34) qui est guidé hors du matériau du boîtier de filtre (12, 14).

12. Dispositif de filtre selon l'une quelconque des revendications 1 à 11, **caractérisé en ce que** l'au moins une bande chauffante (30) est pourvue sur au moins l'une de ses régions d'extrémité d'un contact électrique (34) qui est réalisé dans un matériau différent de celui de la bande chauffante (30).

13. Dispositif de filtre selon l'une quelconque des revendications 1 à 12, **caractérisé en ce que** la bande chauffante (30) est réalisée sur sa région d'extrémité tournée vers le contact électrique avec au moins une ouverture (38) dans laquelle une saillie (40) réalisée sur le contact électrique (34) est insérée et rivetée.

14. Dispositif de filtre selon l'une quelconque des revendications 1 à 13, **caractérisé en ce que** la bande chauffante (30) est fabriquée en un matériau spécifiquement à haute impédance et le contact électrique riveté (34) est fabriqué en un matériau spécifiquement à faible impédance.

15. Procédé de fabrication d'un dispositif de filtre selon l'une quelconque des revendications 1 à 14, **caractérisé en ce que** le contact électrique (34) est riveté à la bande chauffante (30) au cours d'une étape de travail, dans laquelle la bande chauffante (30) est simultanément estampée.
